# EUROPÄISCHE PATENTSCHRIFT

(11) **EP 2 942 313 B1**
(45) Veröffentlichungstag und Bekanntmachung des Hinweises auf die Patenterteilung: **14.10.2020**
(21) Anmeldenummer: 15166666.6
(22) Anmeldetag: 06.05.2015
(51) Int. Cl.: B65G 1/06, B66F 9/06, B66F 9/075, B62B 3/06

(54) **TRANSPORTVORRICHTUNG UND VERWENDUNG**
TRANSPORT DEVICE AND USE
DISPOSITIF DE TRANSPORT ET UTILISATION

(30) Priorität: 07.05.2014 DE 102014106403
(43) Veröffentlichungstag der Anmeldung: 11.11.2015
(73) Patentinhaber: Pester Pac Automation GmbH, 87787 Wolfertschwenden (DE)
(72) Erfinder: Haug, Hans, 87730 Bad Grönenbach (DE)
(74) Vertreter: Hutzelmann, Gerhard

(56) Entgegenhaltungen:
- EP-A1- 0 219 066
- WO-A2-2009/043474
- US-A1- 2006 180 375
- US-A1- 2007 288 123
- US-A1- 2012 221 186
- US-B1- 8 312 957
- DANIEL LECKING ET AL: "Variable Pallet Pick-Up for Automatic Guided Vehicles in Industrial Environments", EMERGING TECHNOLOGIES AND FACTORY AUTOMATION, 2006. ETFA '06. IEE E CONFERENCE ON, IEEE, PI, 1. September 2006 (2006-09-01), Seiten 1169-1174, XP031082663, ISBN: 978-0-7803-9758-3

## Beschreibung

Die Erfindung bezieht sich auf eine Transportvorrichtung für Lasten, mit einem Antrieb zum Lenken und Fahren, einem Steuergerät und einer Stromversorgung, wobei ein Trägerteil zur Aufnahme der Last vorgesehen ist, wobei wiederum innerhalb des durch das Trägerteil definierten Raumes der Antrieb, Steuergerät und Stromversorgung angeordnet sind. Das Dokument WO 2009 043474 offenbart eine solche Vorrichtung.

Es sind verschiedenartige Transportvorrichtungen dieses Typs bekannt, die jedoch alle den Nachteil aufweisen, nur auf vorgegebenen Bahnen bewegt werden zu können, wobei diese Bahnen beispielsweise durch Schienen, Markierungen oder dergleichen vorgegeben sind.

Der vorliegenden Erfindung liegt die Aufgabe zugrunde, eine universell einsetzbare Transportvorrichtung vorzuschlagen, die vor allem im Umfeld von Verpackungsmaschinen flexibel einsetzbar ist.

Diese Aufgabe wird erfindungsgemäß durch die Merkmale des Anspruchs 1 gelöst.

Die Transportvorrichtung kann in beliebige Richtungen bewegt werden.

Dabei hat es sich erfindungsgemäß als sehr vorteilhaft erwiesen, dass drei oder mehr Räder vorgesehen sind, die zusammen anstatt einer Achse einen Fahr- bzw. Drehschemel bilden.

Hiermit wird eine große Stabilität erreicht.

Eine weitere erfindungsgemäß sehr vorteilhafte Ausgestaltung liegt vor, wenn daß wenigstens an einer Achse ein oder mehr Mecanum-Räder vorgesehen sind.

Mecanum-Räder erlauben eine allseitige Bewegung, ohne daß eine Lenkachse vorgesehen sein müsste.

Eine weitere sehr vorteilhafte Ausgestaltung der Erfindung liegt auch dann vor, wenn die Räder jeder Achse derart angeordnet sind, daß die Transporteinrichtung bei beliebiger Ausrichtung der Achsen sowohl in Längs- als auch in Querrichtung stabil geführt und gelagert ist.

Hierdurch wird bei einer länglichen Ausgestaltung der Transportvorrichtung, beispielsweise in Form einer Kufe, eine allseitige Beweglichkeit auch bei Lenkbewegungen ermöglicht, ohne die Stabilität der Transportvorrichtung negativ zu beeinflussen.

Erfindungsgemäß hat es sich auch als sehr vorteilhaft erwiesen, wenn die einzelnen Räder dreh- und/oder lenkbar ausgebildet sind.

Damit wird Schlupf und damit Abrieb vermieden.

Eine sehr vorteilhafte Weiterbildung der Erfindung liegt auch darin, daß eine Hubvorrichtung vorgesehen ist, die das Trägerteil und die Last anzuheben vermag.

Dadurch kann die Transportvorrichtung auch unter zu transportierende Lasten fahren, diese selbsttätig aufnehmen und transportieren.

Dabei ist es äußerst vorteilhaft, wenn zwischen dem Trägerteil und jeweils einer Achse eine durch von den Rädern durch Verdrehen der Achse um die Hochachse angetriebene Einrichtung zum Heben und Senken des Trägerteils vorgesehen ist, wobei hierbei eine Kupplung oder ein wenigstens begrenzt wirkender Freilauf vorgesehen sein kann.

Hierdurch kann auf einfache Art und Weise auch eine große Last angehoben werden. Durch ein unabhängiges Arbeiten der einzelnen Achsen kann die Last auch ausnivelliert werden.

Äußerst vorteilhaft ist es gemäß einer weiteren Fortbildung der Erfindung auch, wenn wenigstens eine Sicherheitseinrichtung zur Verhinderung von Kollisionen mit Gegenständen oder Personen vorgesehen ist.

Dadurch lassen sich Unfälle und vor allem Verletzungen von Mitarbeitern verhindern. Es ist auch denkbar, daß die Transporteinrichtung Hindernissen selbsttätig ausweicht.

Sehr vorteilhaft ist es auch, wenn eine Ladevorrichtung zur Aufladung der Stromversorgung vorgesehen ist.

Hiermit wird ein fortwährender Einsatz ermöglicht. So kann beispielsweise bei Stopps die Stromversorgung aufgeladen werden.

Erfindungsgemäß ist es auch äußerst vorteilhaft, wenn Sensoren, Aktoren und Kommunikationsmittel vorgesehen sind.

Durch Sensoren kann die Umgebung erkannt werden. So ist ein quasi autonomer Fahrbetrieb möglich. Durch die Aktoren können Betriebszustände erreicht werden. Mit Hilde der Kommunikationsmittel kann an eine Zentrale oder andere Transportvorrichtungen Informationen übertragen bzw. von diesen empfangen werden.

Eine weitere sehr vorteilhafte Ausgestaltung der Erfindung liegt auch darin, daß die Transportvorrichtung mit einem zumindest teilautomatischen Navigationssystem ausgerüstet ist.

Eine erfindungsgemäß sehr vorteilhafte Verwendung der Transportvorrichtung liegt vor, wenn die Transportvorrichtung innerhalb und/oder zwischen Verpackungsmaschinen und/oder Palettierern vorgesehen ist.

Gerade innerhalb von Verpackungsmaschinen, dort zur Zu- und Abführung von Material und fertigen Verpackungen, sowie der Übergabe von Verpackungen zwischen Bearbeitungsstationen ist eine flexible Transportlösung äußerst vorteilhaft. Bislang wurden hierfür Transportsysteme genutzt, die beispielsweise an Ketten gezogen wurden.

Dabei ist es äußerst vorteilhaft, wenn die Transportvorrichtung von Bearbeitungsstation zu Bearbeitungsstation fährt, und dabei die zu be- bzw. verarbeitenden Gegenstände transportiert, abholt und abliefert.

Dadurch wird eine flexible und ständig an auftretende Erfordernisse anpassbare Transporteinrichtung innerhalb einer Verpackungsmaschine geschaffen.

Sehr vorteilhaft ist es erfindungsgemäß auch, wenn die Transportvorrichtung auf vorgegebenen Wegen fahren.

Innerhalb dieser Wege kann die Transporteinrichtung frei fahren, überholen, halten oder aber auch, wenn es erforderlich ist, ausgeschleust werden.

Gemäß einer weiteren Ausgestaltung der Erfindung ist es auch sehr vorteilhaft, wenn jede Transportvorrichtung nach entsprechenden Vorgaben wenigstens weitgehend selbständig navigiert.

Hierdurch können autarke Systeme geschaffen werden, die jeweils auf Erfordernisse reagieren und selbsttätig navigieren.

Dabei ist es sehr vorteilhaft, wenn eine zentrale Steuerung für mehrere Transportvorrichtungen vorgesehen ist.

Hierdurch können die einzelnen Transportvorrichtungen miteinander koordiniert und verknüpft werden.

Im folgenden ist die Erfindung anhand mehrerer Ausführungsbeispiele veranschaulicht.

Dabei zeigen:
Fig. 1 eine schematische Ansicht einer Transportvorrichtung (nicht beanspruchte Ausführungsform),
Fig. 2 eine schematische Ansicht der Transportvorrichtung mit Fahrschemeln, und

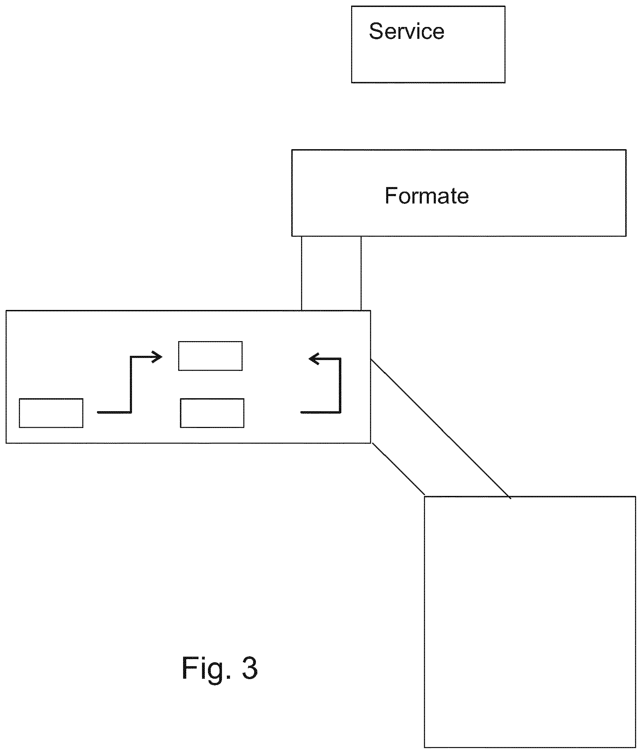

Fig. 3 eine schematische Ansicht einer möglichen Fahrstrecke einer erfindungsgemäßen Transportvorrichtung.

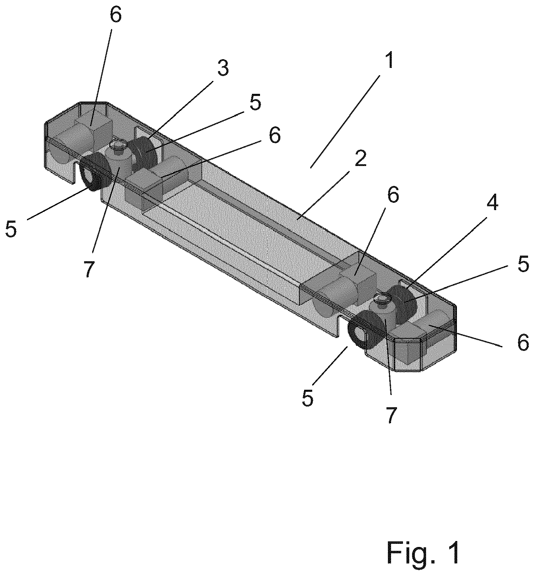

Mit 1 ist in Fig. 1 eine nicht beanspruchte Ausführungsform der Transportvorrichtung mit einem Trägerteil 2 und zwei Achsen 3 und 4 bezeichnet. Die Achsen 3 und 4 tragen jeweils zwei Räder 5. Die Achsen 3 und 4 sind im Bereich der Enden des Trägerteils 2 angeordnet und sind drehbar um eine vertikale Achse gelagert.

Im Inneren des Trägers ist Raum für eine nicht dargestellte Stromversorgung und einen Steuerungsrechner.

Den Achsen 3 und 4 sind desweiteren noch jeweils zwei Antriebseinheiten 6 zugeordnet, mit denen die Räder 5 angetrieben werden können.

Durch gegenläufigen Antrieb der Räder 5 an einer Achse kann die Achse gedreht werden. Diese Drehung hebt über eine Schraubspindel 7 das Tragteil 2 an bzw. senkt dieses ab. Dabei ist es denkbar, daß eine Kupplung zum Auskuppeln der Schraubspindel 7 oder ein definierter Freilauf vorgesehen ist, um bei Lenkbewegungen der Achsen ein unerwünschtes Verändern der Höhe des Tragteils 2 zu verhindern.

Auch ein Anheben mit Hilfe eines Hydraulikteils oder dergleichen ist denkbar. Ebenso kann die Schraubspindel 7 durch einen separaten Antriebsmotor angetrieben werden, so daß diese von den Rädern 5 und der Achsdrehung unabhängig ist.

Es ist aber auch denkbar, daß auf die Hubeinrichtung völlig verzichtet wird und die Transportvorrichtung 1 als reines Shuttle eingesetzt wird, welches durch andere Maschinenteile be- bzw. entladen wird.

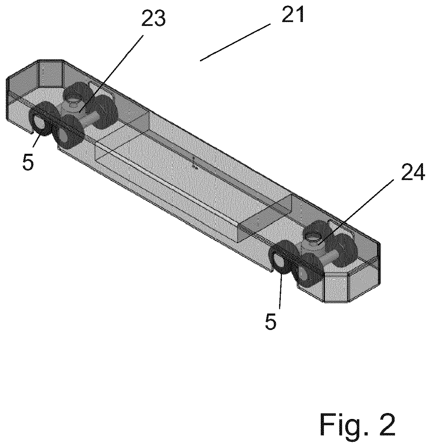

In Fig. 2 ist die Transportvorrichtung 21 dargestellt, die anstatt von Achsen 3 und 4 Fahrschemel 23 und 24 verbaut hat, die jeweils mit vier Rädern 5 versehen sind.

Diese können in jede beliebige Richtung gedreht werden, ohne die Stabilität der Transportvorrichtung 21 negativ zu beeinflussen. Ein seitliches Kippen der Transportvorrichtung 21 wird wirksam verhindert, das bei Achsen mit zwei Rädern auftreten würde.

Daher kann die Transportvorrichtung 21 in jede beliebige Richtung fahren.

In diesem Zusammenhang ist es auch denkbar, daß die Räder 5 selbst lenkbar ausgeführt sind, um Schlupf zwischen den Rädern 5 und der Fahrbahn zu vermeiden. Unnötiger Abrieb der Räder und der Fahrbahn wird so verhindert.

Eine andere denkbare Variante besteht darin, Mecanum-Räder einzusetzen, die in alle Richtungen zu fahren vermögen, ohne gelenkt zu werden.

An der Transportvorrichtung 1 sind nicht dargestellte Sensoren vorgesehen, welche die Umgebung wenigstens insoweit zu erfassen vermögen, daß Zusammenstöße mit Gegenständen und/oder Personen vermieden werden können.

Es ist denkbar, daß weitere Sensoren, zum Beispiel zur Positionsbestimmung oder dergleichen vorgesehen sind. Ebenso können Aktuatoren für verschiedenste Aufgaben vorgesehen sein.

Eine Kommunikation mit anderen Transportvorrichtungen 1 bzw. 21 und/oder einer zentralen Einrichtung ist denkbar.

Grundsätzlich sollen die Transportvorrichtungen 1 bzw. 21 autonom auf einer vorgegebenen Fahrbahn 31 manövrieren können. Den Transportvorrichtungen 1 bzw. 21 wird die jeweilige Aufgabe vorgegeben. Steht eine andere Transportvorrichtung 1 bzw. 21 im Weg, so kann diese überholt werden. Auch Ausweichmanöver sind denkbar.

Kurvenfahrten sind möglich.

Es ist in diesem Zusammenhang auch denkbar, daß Transportvorrichtungen 1 bzw. 21, die einen Service benötigen, oder beispielsweise durch einen Selbsttest einen Defekt festgestellt haben, zu einer Service-Stelle fahren. Die Aufgabe dieser Transportvorrichtung wird dann durch eine andere Transportvorrichtung übernommen, die beispielsweise aus einem Servicebereich in die Anlage einfährt.

Die Navigation und Positionsbestimmung der Transportvorrichtungen 1 bzw. 21 kann beispielsweise durch die Erfassung optischer Merkmale, denkbar sind hier beispielsweise Begrenzungslinien, Induktionsspulen, Lasermarken aber auch durch Funkortung erfolgen.

Die Transportvorrichtungen 1 bzw. 21 fahren in durch eine zentrale Stelle koordinierter Art und Weise von einer Bearbeitungsstation zur nächsten und können so einen flexiblen Transport innerhalb der Verpackungsmaschine ermöglichen.

Eine Ladeeinrichtung für die Stromversorgung ist denkbar, so daß diese bei kurzen Zwischenstopps der Transportvorrichtung 1 bzw. 21 nachgeladen werden kann.

## Patentansprüche

1. Transportvorrichtung (1) für Lasten, mit einem Antrieb zum Lenken und Fahren, einem Steuergerät und einer Stromversorgung, wobei ein Trägerteil (2) zur Aufnahme der Last vorgesehen ist, wobei wiederum innerhalb des durch das Trägerteil (2) definierten Raumes der Antrieb, Steuergerät und Stromversorgung angeordnet sind, wobei die Transportvorrichtung (1) mindestens zwei voneinander beabstandete Achsen (3, 4) mit jeweils mindestens einem, vorzugsweise mindestens zwei Rädern (5), wobei wenigstens jeweils eines dieser Räder (5) angetrieben ist und wobei die Achsen (3, 4) um eine Hochachse drehbar gelagert sind und jeweils mindestens eine Antriebseinheit (6) für jedes angetriebene Rad (5) aufweisen, **dadurch gekennzeichnet, dass** drei oder mehr Räder (5) vorgesehen sind, die zusammen anstatt einer Achse (3, 4) einen Fahr- bzw. Drehschemel (23, 24) bilden.

2. Transportvorrichtung nach Anspruch 1, **dadurch gekennzeichnet, daß** wenigstens an einer Achse (3, 4) ein oder mehr Mecanum-Räder vorgesehen sind.

3. Transportvorrichtung nach Anspruch 1 oder 2, **dadurch gekennzeichnet, daß** die Räder (5) jeder Achse (3, 4) derart angeordnet sind, daß die Transporteinrichtung (1) bei beliebiger Ausrichtung der Achsen (3, 4) sowohl in Längs- als auch in Querrichtung stabil geführt und gelagert ist.

4. Transportvorrichtung nach einem der vorangehenden Ansprüche, **dadurch gekennzeichnet, daß** die einzelnen Räder (5) dreh- und/oder lenkbar ausgebildet sind.

5. Transportvorrichtung nach einem der vorangehenden Ansprüche, **dadurch gekennzeichnet, daß** eine Hubvorrichtung vorgesehen ist, die das Trägerteil (2) und die Last anzuheben vermag.

6. Transportvorrichtung nach Anspruch 6, **dadurch gekennzeichnet, daß** zwischen dem Trägerteil (2) und jeweils einer Achse (3, 4) eine durch von den Rädern (5) durch Verdrehen der Achse (3, 4) um die Hochachse angetriebene Einrichtung zum Heben und Senken des Trägerteils (2) vorgesehen ist, wobei hierbei eine Kupplung oder ein wenigstens begrenzt wirkender Freilauf vorgesehen sein kann.

7. Transportvorrichtung nach einem der vorangehenden Ansprüche, **dadurch gekennzeichnet, daß** wenigstens eine Sicherheitseinrichtung zur Verhinderung von Kollisionen mit Gegenständen oder Personen vorgesehen ist.

8. Transportvorrichtung nach einem der vorangehenden Ansprüche, **dadurch gekennzeichnet, daß** eine Ladevorrichtung zur Aufladung der Stromversorgung vorgesehen ist.

9. Transportvorrichtung nach einem der vorangehenden Ansprüche, **dadurch gekennzeichnet, daß** Sensoren, Aktoren und Kommunikationsmittel vorgesehen sind.

10. Transportvorrichtung nach einem der vorangehenden Ansprüche, **dadurch gekennzeichnet, daß** die Transportvorrichtung (1) mit einem zumindest teilautomatischen Navigationssystem ausgerüstet ist.

11. Verwendung einer Transportvorrichtung (1) nach Anspruch 1 **dadurch gekennzeichnet, daß** die Transportvorrichtung (1) innerhalb und/oder zwischen Verpackungsmaschinen und/oder Palettierern vorgesehen ist.

12. Verwendung nach Anspruch 11, **dadurch gekennzeichnet, daß** die Transportvorrichtung (1) von Bearbeitungsstation zu Bearbeitungsstation fährt, und dabei die zu be- bzw. verarbeitenden Gegenstände transportiert, abholt und abliefert.

13. Verwendung nach Anspruch 11 oder 12, **dadurch gekennzeichnet, daß** die Transportvorrichtung (1) auf vorgegebenen Wegen fahren.

14. Verwendung nach Anspruch 11, 12 oder 13, **dadurch gekennzeichnet, daß** jede Transportvorrichtung (1) nach entsprechenden Vorgaben wenigstens weitgehend selbständig navigiert.

15. Verwendung nach Anspruch 14, **dadurch gekennzeichnet, daß** eine zentrale Steuerung für mehrere Transportvorrichtungen (1) vorgesehen ist.

## Claims

1. Transport device (1) for loads, with a drive for steering and travel, a control system and a power supply, wherein a support part (2) for reception of the load is provided, wherein the drive, control system and power supply are in turn arranged within the space defined by the support part (2), wherein the transport device (1) has at least two mutually spaced-apart axles (3, 4) each with at least one wheel, preferably at least two wheels (5), wherein at least a respective one of these wheels (5) is driven and wherein the axles (3, 4) are mounted to be rotatable about a main axis and each comprise at least one drive unit (6) for each driven wheel (5), **characterised in that** three or more wheels (5) are provided and together form instead of an axle (3, 4) a subframe or turntable (23, 24).

2. Transport device according to claim 1, **characterised in that** one or more Mecanum wheels is or are provided at least at one axle (3, 4).

3. Transport device according to claim 1 or 2, **characterised in that** the wheels (5) of each axle (3, 4) are so arranged that the transport device (1) in any orientation of the axles (3, 4) can be stably guided and mounted not only in longitudinal direction, but also in transverse direction.

4. Transport device according to any one of the preceding claims, **characterised in that** the individual wheels (5) are constructed to swivellable and/or steerable.

5. Transport device according to any one of the preceding claims, **characterised in that** a stroke device capable of raising the support part (2) and the load is provided.

6. Transport device according to claim 6, **characterised in that** a device, which is driven by the wheels (5) through rotation of the axle (3, 4) about the main axis, for raising and lowering the support part (2) is provided between the support part (2) and a respective one of the axles (3, 4), wherein a clutch or a freewheel with at least limited action can then be provided.

7. Transport device according to any one of the preceding claims, **characterised in that** at least one safety device for preventing collisions with objects or persons is provided.

8. Transport device according to any one of the preceding claims, **characterised in that** a charging device for charging the power supply is provided.

9. Transport device according to any one of the preceding claims, **characterised in that** sensors, actuators and communications means are provided.

10. Transport device according to any one of the preceding claims, **characterised in that** the transport device (1) is equipped with an at least partly automatic navigation system.

11. Use of a transport device (1) according to claim 1, **characterised in that** the transport device (1) is provided within and/or between packaging machines and/or palettising means.

12. Use according to claim 11, **characterised in that** the transport device (1) travels from processing station to processing station and **in that** case transports, picks up and delivers the articles to be treated or processed.

13. Use according to claim 11 or 12, **characterised in that** the transport device (1) travels on predetermined paths.

14. Use according to claim 11, 12 or 13, **characterised in that** each transport device (1) at least substantially independently navigates in accordance with appropriate default settings.

15. Use according to claim 14, **characterised in that** a central control for several transport devices (1) is provided.

## Revendications

1. Dispositif de transport (1) destiné à des charges, doté d'un entraînement dévolu au braquage et au déplacement, d'un appareil de commande et d'une alimentation en courant, une partie de support (2) étant prévue pour recevoir la charge, ledit entraînement, ledit appareil de commande et ladite alimentation en courant étant, à leur tour, logés à l'intérieur de l'espace défini par ladite partie de support (2), ledit dispositif de transport (1) comportant au moins deux essieux (3, 4) distants l'un de l'autre et respectivement munis d'au moins une, de préférence d'au moins deux roues (5), sachant qu'au moins l'une de ces roues (5) est menée à chaque fois, et sachant que lesdits essieux (3, 4) sont montés à rotation autour d'un axe vertical et sont pourvus, respectivement, d'au moins une unité d'entraînement (6) affectée à chaque roue menée (5), **caractérisé par** la présence de roues (5) au nombre de trois ou plus, qui forment associativement un bogie de déplacement ou de rotation (23, 24) se substituant à un essieu (3, 4).

2. Dispositif de transport selon la revendication 1, **caractérisé par le fait qu'**une ou plusieurs roue(s) Mecanum est (sont) prévue(s) au moins sur un essieu (3, 4).

3. Dispositif de transport selon la revendication 1 ou 2, **caractérisé par le fait que** les roues (5) de chaque essieu (3, 4) sont agencées de façon telle que ledit dispositif de transport (1) soit guidé et monté de manière stable, dans les directions tant longitudinale que transversale, quelle que soit l'orientation des essieux (3, 4).

4. Dispositif de transport selon l'une des revendications précédentes, **caractérisé par le fait que** les roues individuelles (5) sont réalisées avec faculté de rotation et/ou de braquage.

5. Dispositif de transport selon l'une des revendications précédentes, **caractérisé par** la présence d'un dispositif de levage apte à soulever la partie de support (2) et la charge.

6. Dispositif de transport selon la revendication 5, **caractérisé par le fait qu'**un système, affecté au soulèvement et à l'abaissement de la partie de support (2), est prévu entre ladite partie de support (2) et un essieu (3, 4) considéré et est entraîné par les roues (5), sous l'effet d'une rotation dudit essieu (3, 4) autour de l'axe vertical, un accouplement, ou un ensemble à roue libre à action au moins limitée, pouvant alors être prévu.

7. Dispositif de transport selon l'une des revendications précédentes, **caractérisé par le fait qu'**au moins un système de sécurité est prévu pour prévenir des collisions avec des objets ou des personnes.

8. Dispositif de transport selon l'une des revendications précédentes, **caractérisé par le fait qu'**un dispositif de mise en charge est prévu pour charger l'alimentation en courant.

9. Dispositif de transport selon l'une des revendications précédentes, **caractérisé par** la présence de capteurs, d'actionneurs et de moyens de communication.

10. Dispositif de transport selon l'une des revendications précédentes, **caractérisé par le fait que** ledit dispositif de transport (1) est équipé d'un système de navigation au moins partiellement automatique.

11. Utilisation d'un dispositif de transport (1) conforme à la revendication 1, **caractérisée par le fait que** ledit dispositif de transport (1) est prévu à l'intérieur de machines de conditionnement et/ou de palettisation, et/ou entre ces dernières.

12. Utilisation selon la revendication 11, **caractérisée par le fait que** le dispositif de transport (1) se déplace d'un poste de traitement à un autre et assure alors le transport, l'enlèvement et la dépose des objets devant être respectivement traités ou transformés.

13. Utilisation selon la revendication 11 ou 12, **caractérisée par le fait que** le dispositif de transport (1) se déplace sur des trajets préétablis.

14. Utilisation selon la revendication 11, 12 ou 13, **caractérisée par le fait que** chaque dispositif de transport (1) navigue de manière au moins amplement autonome, en conformité avec des spécifications correspondantes.

15. Utilisation selon la revendication 14, **caractérisée par le fait qu'**une commande centralisée est prévue pour plusieurs dispositifs de transport (1).
